# EUROPÄISCHE PATENTSCHRIFT

(11) **EP 0 425 735 B1**
(45) Veröffentlichungstag und Bekanntmachung des Hinweises auf die Patenterteilung: **04.08.1993**
(21) Anmeldenummer: 89202968.7
(22) Anmeldetag: 30.10.1989
(51) Int. Cl.: G01F 15/00, G01G 13/285, G05D 7/06, G01G 11/08

(54) **Wäge-Dosiervorrichtung für fliessfähige Stoffe**
Metering by weight device for flowable substance
Dispositif de dosage par poids pour matière coulante

(43) Veröffentlichungstag der Anmeldung: 08.05.1991
(73) Patentinhaber: BRABENDER TECHNOLOGIE KG, D-47055 Duisburg (DE)
(72) Erfinder: Hauptkorn, Alfred, D-4134 Rheinberg (DE)
(74) Vertreter: Ackmann, Günther

(56) Entgegenhaltungen:
- EP-A- 0 291 553
- DE-A- 2 900 863
- FR-A- 2 544 492

## Beschreibung

Die Erfindung betrifft eine Dosiervorrichtung für fließfähige Stoffe, wie Granulat, Pulver und Flüssigkeiten, bestehend aus einem mit einer regelbaren Entleerungseinrichtung versehenen Stoffbehälter, einer Wägeeinrichtung für den Stoffbehälter oder für eine der Entleerungseinrichtung nachgeordnete Förderstrecke, sowie einer mit einem Rechenwerk versehenen elektronischen Schaltung zur Ansteuerung der Entleerungseinrichtung, welche die in einem Zeitabschnitt gebildeten digitalen Meßimpulse der Wägeeinrichtung zählt, mit einem Sollwert vergleicht und bei einer Abweichung eine Stellgröße für die Entleerungseinrichtung bildet.

Zur Dosierung von fließfähigen Stoffen sind Dosier-Differentialwaagen bekannt, bei denen zur Erzielung einer konstanten Fördermenge die Geschwindigkeit der Dosiervorrichtung durch Vergleich eines durch Wägen ermittelten Istwertes mit einem Sollwert geregelt wird. Die Ermittlung des Istwertes kann entweder durch die Gewichtsabnahme beim Entleeren eines mit dem Dosiergut gefüllten Behälters oder durch die Gewichtsbestimmung einer von dem Dosiergut beaufschlagten Förderstrecke geschehen. Um eine große Regelgenauigkeit zu erzielen, muß schon bei einer sehr geringen Änderung der Meßimpulse ein Regeleingriff stattfinden. In nachteiliger Weise entstehen aber durch äußere Einwirkung auf die Wägeeinrichtung, wie Erschütterung, Stöße u. dgl., erhebliche Störgrößen, die zu gravierenden Fehldosierungen führen.

Neben einer analogen Verarbeitung der Meßsignale ist auch eine digitale Verarbeitung bekannt, bei der ein dem Gewicht proportionales, digitales Meßsignal gebildet wird. Das kann entweder durch Digitalisierung eines analogen Meßsignals oder unmittelbar mit Hilfe einer digitalen Wägeeinrichtung geschehen, bei der die Änderungen der Frequenzen gemessen werden. Bei der aus der DE-OS 2754527 bekannten Vorrichtung werden die Meßimpulse und Taktimpulse mittels Torschaltungen gespeichert. Die Anzahl der in vorbestimmten Zeitspannen gespeicherten Meßimpulse wird mit einer vorgegebenen Anzahl verglichen. Zur Überwachung der Regelung wird der Steigungswinkel in den Meßphasen bestimmt und jeweils mit dem zuvor ermittelten Steigungswinkel verglichen. Fallen beim Vergleich mehr als eine vorbestimmte Anzahl Meßpunkte heraus, fährt die Entleerungseinrichtung mit der zuvor bestimmten und gespeicherten Geschwindigkeit weiter. Die Regelung wird also gesperrt. Erst wenn bei den folgenden Messungen die Abweichungen aufeinanderfolgender Meßperioden innerhalb der vorgegebenen Grenzen liegen, wird die Regelung wieder zugeschaltet. Um äußere Störeinflüsse zu eliminieren, wird bei der aus der DE-OS 2754527 bekannten Ausführung ein Korrekturfaktor bei einem Betriebszustand ermittelt, in dem das Dosiergut auf der Wägeeinrichtung zurückgehalten wird. Es werden die Schwingungen des Dosierantriebs ermittelt und als digitalisierte Werte im Rechner gespeichert. Diese werden dann von den gleichzeitig ermittelten Meßsignalen abgezogen. Auch bei einem wahlweise einstellbaren volumetrischen Betrieb wird der Regelkreis unterbrochen und werden die jeweils zuvor gespeicherten Abtastwerte zur Steuerung der Dosiervorrichtung verwendet. Damit beim Wiederauffüllen des dem Wägesystem zugeordneten Behälters der Dosiervorgang anhält, wird während der Dauer des Auffüllens von dem geregelten gravimetrischen Betrieb auf den nur steuernden volumetrischen Betrieb umgeschaltet.

Bei den bekannten Dosiervorrichtungen besteht der Nachteil, daß die Ansprechempfindlichkeit wegen der zu berücksichtigenden Störgrößen nicht ausreichend fein einstellbar ist. Ein Ausfiltern von Störgrößen geht in der Regel immer auf Kosten der Meßgenauigkeit. Nachteilig ist weiterhin, daß bei Einwirkung von Erschütterung, Stößen u. dgl. auf die Wägeeinrichtung der Regelkreis unterbrochen und mit der zuvor gespeicherten Regelgröße als Festwert weitergesteuert wird, also eine volumetrische Dosierung stattfindet, die aber eine exakte Dosierung nicht zuläßt.

Demgegenüber liegt der Erfindung die Aufgabe zugrunde, eine Dosiervorrichtung der gattungsgemäßen Art derart auszubilden, daß bei äußeren Störeinwirkungen und/oder beim Wiederauffüllen des Behälters, dem der Stoff entnommen wird, also bei allen Betriebsbedingungen, eine gravimetrische Dosierung beibehalten wird.

Diese Aufgabe wird erfindungsgemäß dadurch gelöst, daß die Schaltung eine Einrichtung zur Bildung und Verarbeitung eines Stützwertes aufweist, welche vor einer betriebsmäßigen Benutzung der Dosiervorrichtung in einem umweltseitig störungsfreien Einstellbetrieb bei ein oder mehreren Fördergeschwindigkeiten der Entleerungseinrichtung die Meßimpulse der Wägeeinrichtung speichert, mit Hilfe des Sollwertes auf den Verstellbereich umrechnet, die Stützwerte den bei der betriebsmäßigen Benutzung gebildeten Meßimpulsen während des Auftretens überhöhter Meßimpulse oder zeitweise durch einen Taktgeber zumischt und welche die Mischwerte mit dem Sollwert vergleicht und bei einer Abweichung die Stellgrössen für die Entleerungseinrichtung bildet.

In vorteilhafter Weise wird erfindungsgemäß ein Stützwert geschaffen, der vor einer betriebsmäßigen Benutzung in einem Einstellbetrieb gebildet wird, bei dem äußere Störeinflüsse, wie Stöße, Erschütterung u. dgl. von der Dosiervorrichtung ferngehalten werden, aber die sonstigen Betriebsbedingungen vorliegen, also der gefüllte Stoffbehälter entleert wird. Die Stützwerte stellen also Meßwerte dar, die gewissermaßen bei idealisierten Betriebsverhältnissen entstehen. Der Einstellbetrieb kann beispielsweise an einem störungsfreien Standort erfolgen.

Die im Einstellbetrieb gewonnenen Stützwerte werden gespeichert und können bei einer folgenden betriebsmäßigen Benutzung der Dosiervorrichtung am Einsatzort den dabei ermittelten Meßwerten zur Stützung zugemischt werden, wobei der Mischwert ein angepaßter Differenzwert ist, dessen Stützwertanteil auf eine Mittelwertbildung hin wirkt und der durch Vergleich mit dem Sollwert die Regelgröße bildet. Treten beim Dosiervorgang überhöhte Meßimpulse auf, wirken die zugemischten Stützwertanteile dämpfend. In vorteilhafter Weise bleibt aber der Regelkreis erhalten, also eine gravimetrische Dosierung bestehen. Die tatsächlichen Meßimpulse gehen weiter in den Regelkreis ein.

Das Mischungsverhältnis kann beliebig eingestellt oder gesteuert werden,indem die betriebsmäßig ermittelten Meßimpulse und die Stützwerte in einem am Taktgeber einstellbaren oder gesteuerten Verhältnis in ein Schieberegister eingelesen werden. Liegt ein im wesentlichen störungsfreier Betrieb vor, brauchen überhaupt keine Stützwerte zugemischt werden, so daß ein üblicher Regelbetrieb stattfindet. Tritt eine bestimmte, relativ gleichmäßige Grundstörung auf, kann der Stützwertanteil so groß gewählt werden, daß eine ausreichende Mittelwertbildung entsteht, die für eine konstante Dosierung Sorge trägt. Treten hingegen unregelmäßige, große Störwerte auf, kann der Stützwertanteil durch Steuerung höher eingestellt werden. Die betriebsmäßig ermittelten Meßimpulse werden zweckmäßig über einen Filter geführt, dessen Bandbreite fest einstellbar ist oder von den Stützwerten dynamisch gesteuert wird. Die Bandbreite sollte einer gewünschten Empfindlichkeit angepaßt sein.

Um den Einsatzbereich zu erweitern und sehr kurze Störeinflüsse vom Dosiervorgang fernzuhalten, sieht die Erfindung eine Weiterbildung vor, bei der die Schaltung mit einer Einrichtung zur Bildung und Verarbeitung einer Ausgleichsgröße versehen ist, welche die betriebsmäßig ermittelten Meßimpulse einer größeren Anzahl Meßzyklen speichert und durch Vergleich mit dem Sollwert eine Korrekturgröße bildet, die mittels einer Additionsstufe der Regelgröße zuaddiert wird. Die Ausgleichsgröße wird durch die tatsächlichen Meßimpulse gebildet und gehört zum Regelkreis, wobei deren Verarbeitung aber zu einer gewissen Dämpfung führt. Dieser Kanal führt zu einer Langzeitkorrektur. Das Additionsverhältnis von Mischwert und Ausgleichsgröße ist beliebig einstellbar, so daß auch nur mit der Ausgleichsgröße als Regelgröße gravimetrisch dosiert werden kann. Alternativ kann die Ausgleichsgröße für Steuerzwecke verwendet werden. Hierfür ist die Schaltung mit einer Einrichtung zur Bildung und Verarbeitung einer Ausgleichsgröße versehen, welche die betriebsmäßig ermittelten Meßimpulse einer größeren Anzahl Meßzyklen speichert und deren mit dem Sollwert verglichenen Ausgangssignale zur Anpassung des Stützwertes dem Stützspeicher und/oder zur Veränderung des Taktverhältnisses dem Taktgeber zugeführt werden. Verändert sich die Ausgleichsgröße um ein vorgegebenes Maß, wird einerseits der Stützwert durch Vergrößerung oder Verkleinerung angepaßt und/oder das Mischungsverhältnis aus dem normalen Differenzwert und der Stützgröße entsprechend verändert.

Der Gegenstand der Erfindung ist in der Zeichnung anhand von drei Ausführungsbeispielen dargestellt; es zeigt
- Fig. 1: eine elektronische Schaltung in einem Blockschaltbild für eine Dosiervorrichtung mit einem zusätzlichen Schaltkreis zur Bildung eines Stützwertes,
- Fig. 2: den Gegenstand der Fig.1 mit einem zusätzlichen Schaltkreis zur Bildung einer aufaddierbaren Ausgleichsgröße und
- Fig. 3: den Gegenstand der Fig. 2 mit einem zusätzlichen Schaltkreis zur Bildung einer Steuerzwecken dienenden Ausgleichsgröße.

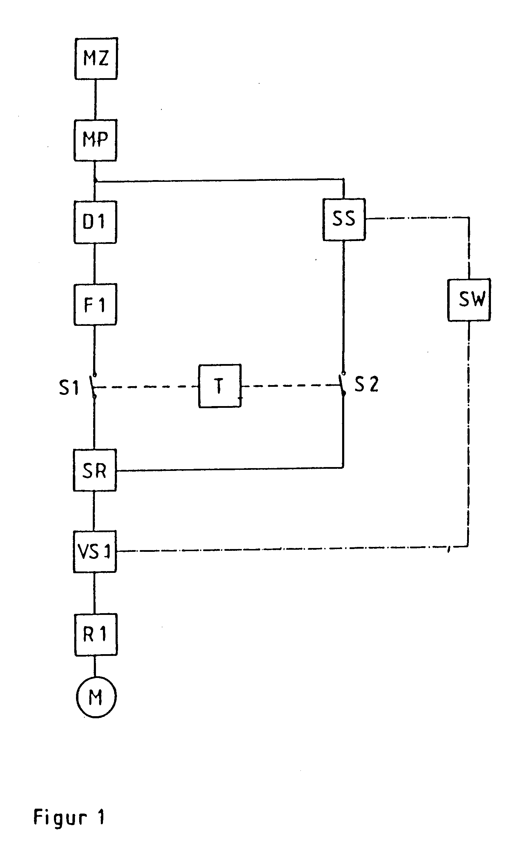

Die in Fig. 1 gezeigte elektronische Schaltung dient der Regelung und Steuerung der Entleerungseinrichtung einer Dosiervorrichtung für fließfähige Stoffe, wie Granulat, Pulver und Flüssigkeiten. Die in der Zeichnung nicht dargestellte Dosiervorrichtung besteht in bekannter Weise aus einem mit einer regelbaren Entleerungseinrichtung versehenen Stoffbehälter. Bekannt sind zwei Wägesysteme. Bei dem einen ist der Stoffbehälter mit der zugeordneten regelbaren Entleerungseinrichtung auf einer Wägeeinrichtung angeordnet, welche der Gewichtsabnahme entsprechende Meßimpulse erzeugt. Bei einer anderen Ausführung kann der Stoffbehälter mit der zugehörigen regelbaren Entleerungseinrichtung ortsfest angeordnet sein, und die Entleerungseinrichtung fördert das Material auf eine nachgeordnete Förderstrecke, beispielsweise ein Dosierband o. dgl., welche auf einer Waage angeordnet ist. Der elektronischen Schaltung ist ein Rechenwerk zugeordnet.

Bei der zuerst genannten Ausführung wird die Gewichtsabnahme der aus Entleerungseinrichtung und Stoffbehälter bestehenden Einheit ermittelt, und bei der anderen Ausführung wird eine Gewichtsveränderung der Förderstrecke festgestellt. In beiden Fällen ist der Wägeeinrichtung eine elektronische Meßzelle MZ zugeordnet, welche der Gewichtsveränderung proportionale, digitale Meßimpulse bildet und speichert. Dabei besteht die Möglichkeit, daß zunächst analoge Meßsignale gebildet werden, die durch einen Analog/Digitalwandler in digitale Meßimpulse umgewandelt wird. Es gibt aber auch Meßzellen für Wägeeinrichtungen, welche unmittelbar digitale Meßimpulse erzeugen.

Die in der Meßzelle MZ gespeicherten, digitalen Meßimpulse werden von einem Mikroprozessor MP zyklisch abgerufen. Der Mikroprozessor MP ist so ausgebildet, daß er durch Filterung, durch eine serielle Übertragung, z. B. ein Schieberegister, und durch Mittelwertbildung eine der Gewichtsveränderung proportionale, numerische Größe bildet. In dem regulären Regelkreis wird die numerische Größe einem Differenzbildner D1 zugeführt, der aus den beiden zuletzt eingelesenen Größen einen Differenzwert bildet. Der Differenzwert wird anschließend über eine Filterstufe F1 geführt, welche den Differenzwert auf eine vorgegebene Bandbreite begrenzt, die bei der Ausführung nach Fig. 1 fest eingestellt ist. Der begrenzte Differenzwert wird über einen Schalter S1, dessen Funktion weiter unten näher beschrieben wird, einem Schieberegister SR aufgegeben. Von diesem Schieberegister SR gelangt das Signal zu einer Vergleichsstufe VS1, welche den Differenzwert mit einem Sollwert vergleicht, der von einem Sollwertgeber SW eingelesen wird. Die Vergleichsgröße der Vergleichsstufe VS1 wird einem Regler R1 zugeführt, welcher die Stellgröße für den Antrieb M der Fördereinrichtung bildet. Dieser Regelkreis dient der normalen Regelung der Dosiervorrichtung.

Die vom Mikroprozessor MP gebildete, der Gewichtsveränderung proportionale, numerische Größe wird weiterhin einem Stützwertspeicher SS zugeführt, der Stützgrößen aus den bei einem umweltseitig störungsfreien Einstellbetrieb gewonnenen, numerischen Größen bildet. Für diesen Einstellbetrieb wird die Dosiervorrichtung in ihrer Gesamtheit an einem störungsfreien Standort betrieben. Dort wird der Stoffbehälter gefüllt und die Dosiervorrichtung betrieben. Die dabei entstehenden, der Gewichtsverringerung proportionalen, numerischen Größen des Mikroprozessors MP werden in den Stützwertspeicher eingegeben. Dieser vergleicht die Werte mit dem Sollwert. Handelt es sich um eine Differential-Dosiervorrichtung, so werden die entsprechenden Stützgrößen für verschiedene Fördergeschwindigkeiten berechnet. Anschließend wird die Dosiervorrichtung am Einsatzort aufgebaut und steht einer betriebsmäßigen Benutzung zur Verfügung. Die Stützgrößen bleiben im Stützwertspeicher SS erhalten und können bedarfsweise abgerufen werden. Dies geschieht über einen Schalter S2, der zusammen mit dem Schalter S1 von einem Taktgeber T betätigt wird. Dieser Taktgeber T schaltet die Differenzwerte der Filterstufe F1 und die Stützgrößen des Stützwertspeichers SS über die Schalter S1 und S2 an ein Schieberregister SR. Das Schieberregister SR speichert nun sowohl die Differenzwerte wie auch die Stützgrößen und mischt diese in dem vom Taktgeber gesteuerten Taktverhältnis. Der gebildete Mischwert ist ein angepaßter Differenzwert, wobei der angepaßte Stützgrößenanteil auf eine Mittelwertbildung hin wirkt. Der Mischwert wird der Vergleichsstufe VS1 zugeführt, welche die Regelgröße durch Vergleich der Mischwerte mit einem Sollwert bildet. Diese Regelgröße wird dann im Regler R1 zur Bildung der Stellgröße für den Antrieb M der Fördereinrichtung verwendet. Der Taktgeber T kann auf ein verschiedenes Taktverhältnis eingestellt werden, so daß über den Schalter S1 bzw. S2 unterschiedliche Signalmengen dem Schieberegister SR zugeführt wird. Die vorgenannten Bauteile sind Bestandteil eines elektronischen Rechenwerkes.

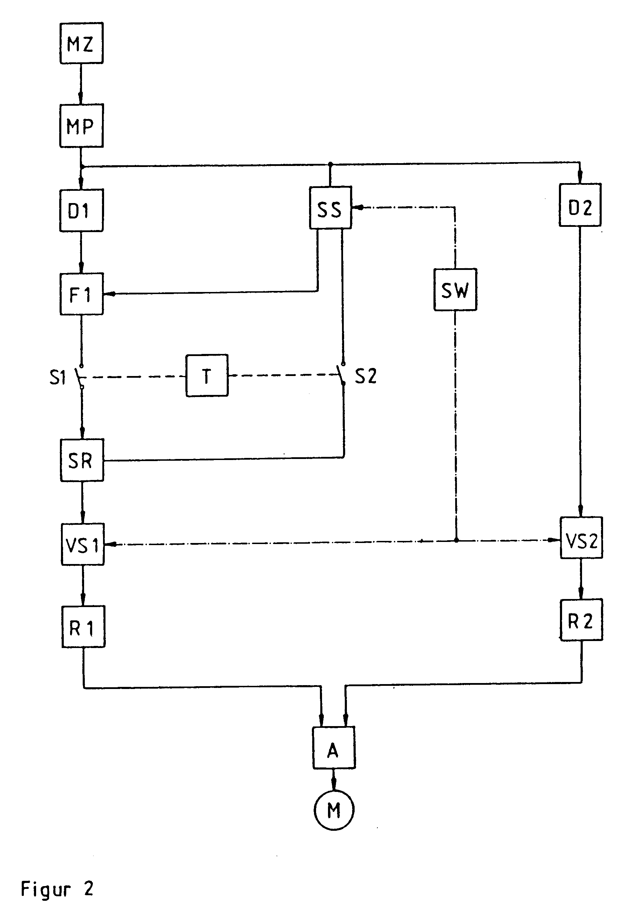

Bei der in Fig. 2 dargestellten Ausführung ist zusätzlich eine Schaltkreis angeordnet, mit dem eine Langzeitkorrektur ermöglicht wird. Dieser zusätzliche Schaltkreis besteht aus einem Differenzbildner D2, der die numerischen Größen vom Mikroprozessor MP erhält und in Langzeitzyklen speichert. Er bildet aus den beiden zuletzt eingelesenen Größen einen Differenzwert. Dieser Differenzwert des Differenzbildners B2 unterscheidet sich von dem Differenzwert des Differenzbildners D1 nur durch die Zeit der Meßwerterfassung. In der Regel wird der Differenzbildner D2 so ausgeführt, daß die Erfassungszyklen etwa zehnmal so groß sind wie die des Differenzbildners D1.

Die Differenzwerte des Differenzbildners D2 werden einer Vergleichsstufe VS2 zugeführt. Dessen Vergleichswert kann verschiedenartig verwendet werden. Bei der Ausführung nach Fig. 2 wird er für eine Regelgröße für einen Regler R2 verwendet. Diese gebildete Stellgröße wird zusammen mit der von dem Regler R1 kommenden Stellgrößen einer Additionsstufe A zugeführt, die eine gemischte Stellgröße für den Antrieb M der Entleerungseinrichtung schafft.

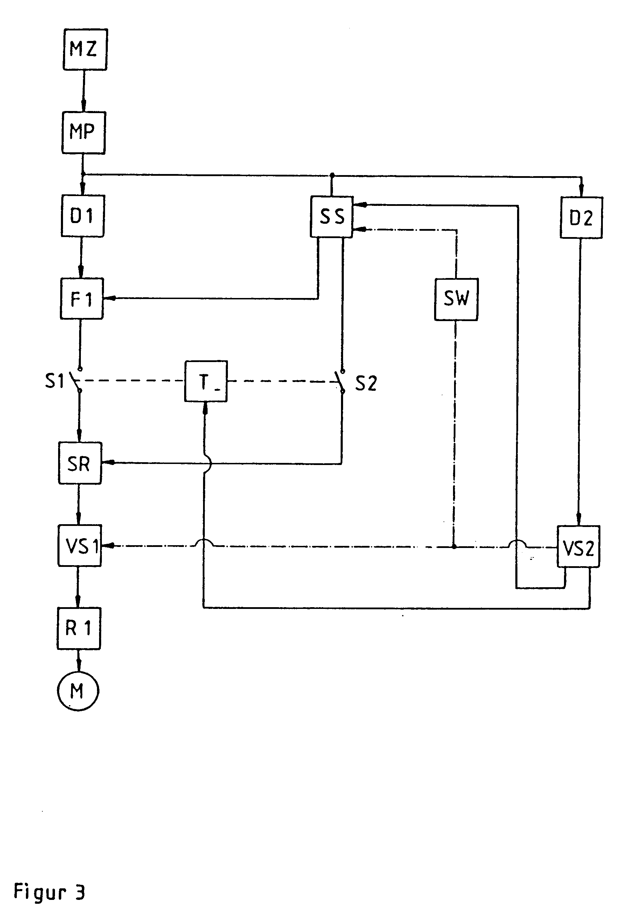

Bei der Ausführung nach Fig. 3 werden die Vergleichswerte der Vergleichsstufe VS2 für Steuerzwecke verwendet. Einerseits dienen die Vergleichswerte als Steuergröße zur Anpassung des Stützwertes, indem sie dem Stützwertspeicher SS zugeführt werden. Weiterhin ist in Fig. 3 eine Steuerung des Taktverhältnisses vorgesehen. Hierfür wird die Vergleichsgröße dem Taktgeber T zugeführt. Beide Maßnahmen können allein oder gemeinsam vorgesehen sein.

Die Ausführungen nach den Fig. 1 bis 3 können auch derart abgewandelt werden, daß der eine Taktgeber beim Auftreten überhöhter Meßimpulse in Betrieb gesetzt wird.

## Patentansprüche

1. Dosiervorrichtung für fließfähige Stoffe, wie Granulat, Pulver und Flüssigkeiten, bestehend aus einem mit einer regelbaren Entleerungseinrichtung versehenen Stoffbehälter, einer Wägeeinrichtung (MZ) für den Stoffbehälter oder für eine der Entleerungseinrichtung nachgeordnete Förderstrecke, sowie einer mit einem Rechenwerk versehenen elektronischen Schaltung zur Ansteuerung der Entleerungseinrichtung, welche die in einem Zeitabschnitt gebildeten digitalen Meßimpulse der Wägeeinrichtung (MZ) zählt, mit einem Sollwert vergleicht und bei einer Abweichung eine Stellgröße für die Entleerungseinrichtung bildet, dadurch gekennzeichnet, daß die Schaltung eine Einrichtung (SS) zur Bildung und Verarbeitung eines Stützwertes aufweist, welche vor einer betriebsmäßigen Benutzung der Dosiervorrichtung in einem umweltseitig störungsfreien Einstellbetrieb bei ein oder mehreren Fördergeschwindigkeiten der Entleerungseinrichtung die Meßimpulse der Wägeeinrichtung speichert, mit Hilfe des Sollwertes auf den Verstellbereich umrechnet, die Stützwerte den bei der betriebsmäßigen Benutzung gebildeten Meßimpulsen während des Auftretens überhöhter Meßimpulse oder zeitweise durch einen Taktgeber zumischt und welche die Mischwerte mit dem Sollwert vergleicht und bei einer Abweichung die Stellgrößen für die Entleerungseinrichtung bildet.

2. Dosiervorrichtung nach Anspruch 1, dadurch gekennzeichnet, daß die betriebsmäßig ermittelten Meßimpulse und die Stützwerte in einem am Taktgeber (T) einstellbaren oder gesteuerten Verhältnis in ein Schieberegister (SR) eingelesen werden.

3. Dosiervorrichtung nach Anspruch 1 oder 2, dadurch gekennzeichnet, daß die betriebsmäßig ermittelten Meßimpulse über einen Filter (F1) geführt werden, dessen Bandbreite fest einstellbar ist oder von den Stützwerten dynamisch gesteuert wird.

4. Dosiervorrichtung nach einem der Ansprüche 1 bis 3, dadurch gekennzeichnet, daß die Schaltung mit einer Einrichtung zur Bildung und Verarbeitung einer Ausgleichsgröße versehen ist, welche die betriebsmäßig ermittelten Meßimpulse einer größeren Anzahl Meßzyklen speichert und durch Vergleich mit dem Sollwert eine Korrekturgröße bildet, die mittels einer Additionsstufe der Regelgröße zuaddiert wird.

5. Dosiervorrichtung nach einem der Ansprüche 1 bis 3, dadurch gekennzeichnet, daß die Schaltung mit einer Einrichtung zur Bildung und Verarbeitung einer Ausgleichsgröße versehen ist, welche die betriebsmäßig ermittelten Meßimpulse einer größeren Anzahl Meßzyklen speichert und deren mit dem Sollwert verglichenen Ausgangssignale zur Anpassung des Stützwertes dem Stützspeicher (SS) und/oder zur Veränderung des Taktverhältnisses dem Taktgeber (T) zugeführt werden.

## Claims

1. A device for metering free-flowing substances such as a granulate or powder or liquids, comprising a container provided with an adjustable emptying device, a weighing device (MZ) for the container or for a conveying track downstream of the emptying device, and an electronic circuit equipped with a computer for actuating the emptying device, the electronic circuit comparing a set value with the digital measuring pulses constructed by the weighing device (MZ) in a time interval and, in the event of a deviation, constructing a correcting variable for the emptying device, characterised in that the circuit comprises a device (SS) for constructing and processing a supporting value, the device storing the measuring pulses of the weighing device at one or more conveying speeds of the emptying device during adjustment operation free from environmental influence before the metering device is used in operation, after which the device for forming the supporting value converts them by means of the set value to the adjustment range, mixes the supporting values with the measuring pulses constructed during use in operation during the occurrence of excessively high measuring pulses or intermittently by a clock generator, and compares the mixed values with the set value and, in the event of a deviation, constructs the correcting variables for the emptying device.

2. A metering device according to claim 1, characterised in that the measuring pulses determined during operation and the supporting values are read into a shift register (SR) in a proportion which is controlled or adjustable at a clock generator (T).

3. A metering device according to claim 1 or 2, characterised in that the measuring pulses determined during operation are transmitted via a filter (F1), the bandwidth of which is permanently adjustable or dynamically controlled by the supporting values.

4. A metering device according to any of claims 1 to 3, characterised in that the circuit is provided with a means for constructing and processing a compensating value which stores the measuring pulses determined during operation in a relatively large number of measuring cycles and compares them with the set value to obtain a corrective value which is added to the control variable by an addition stage.

5. A metering device according to any of claims 1 to 3, characterised in that the circuit is provided with a device for constructing and processing a compensating variable which stores the measuring pulses obtained during operation in a relatively large number of measuring cycles and outputs signals which are compared with the set value and are supplied to the supporting store (SS) for adjusting the supporting value and/or to the clock generator (T) for altering the clock ratio.

## Revendications

1. Dispositif de dosage de matières susceptibles de s'écouler, telles que des granulés, de la poudre et des liquides, comportant une cuve munie d'un dispositif réglable de vidange, un dispositif de pesage (MZ) de la cuve ou d'une voie de convoyage en aval du dispositif de vidange, ainsi qu'un circuit électronique à compteur, qui est destiné à commander le dispositif de vidange, qui compte les impulsions numériques de mesure du dispositif de pesage (MZ) formées pendant un intervalle de temps, qui les compare à une valeur de consigne, et qui, en cas d'écart, forme une grandeur de réglage du dispositif de vidange,
caractérisé en ce que le circuit comporte un dispositif (SS) qui est destiné à la formation et au traitement d'une valeur de base, qui, avant que le dispositif de dosage ne soit utilisé en fonctionnement, mémorise, dans une opération de réglage qui n'est pas perturbée par l'extérieur, les impulsions de mesure du dispositif de pesage pour une vitesse de convoyage ou pour plusieurs vitesses de convoyage du dispositif de vidange, les convertit à l'aide de la valeur de consigne en la plage de réglage, mélange, par un générateur d'impulsions, les valeurs de base aux impulsions de mesure formées lors de l'utilisation en fonctionnement, pendant l'apparition d'impulsions de mesure surélevées ou de temps à autre, compare les valeurs mélangées à la valeur de consigne et forme, en cas d'écart, les grandeurs de réglage du dispositif de vidange.

2. Dispositif de dosage suivant la revendication 1, caractérisé en ce que les impulsions de mesure déterminées pour le fonctionnement et les valeurs de base sont mémorisées dans un registre à décalage (SR), dans un rapport réglable ou commandé dans le générateur d'impulsions (T).

3. Dispositif de dosage suivant la revendication 1 ou 2, caractérisé en ce que les impulsions de mesure déterminées pour le fonctionnement passent par un filtre (F1), dont la bande passante peut être réglée à une valeur fixe ou est commandée dynamiquement par les valeurs de base.

4. Dispositif de dosage suivant l'une des revendications 1 à 3, caractérisé en ce que le circuit est muni d'un dispositif qui est destiné à la formation et au traitement d'une grandeur de compensation, qui mémorise les impulsions de mesure, déterminées pour le fonctionnement, d'un grand nombre de cycles de mesure, et qui forme, par comparaison avec la grandeur de consigne, une valeur de correction à additionner à la grandeur de réglage au moyen d'un étage additionneur.

5. Dispositif de dosage suivant l'une des revendications 1 à 3, caractérisé en ce que le circuit est muni d'un dispositif qui est destiné à la formation et au traitement d'une grandeur de compensation, qui mémorise les impulsions, déterminées pour le fonctionnement, d'un grand nombre de cycles, et dont les signaux de sortie comparés à la valeur de consigne, sont envoyés, pour l'adaptation de la valeur de base, à la mémoire de base (SS) et/ou pour le changement du rapport d'impulsion, au générateur d'impulsions (T).
